# EUROPÄISCHE PATENTSCHRIFT

(11) **EP 3 639 649 B1**
(45) Veröffentlichungstag und Bekanntmachung des Hinweises auf die Patenterteilung: **14.04.2021**
(21) Anmeldenummer: 19202630.0
(22) Anmeldetag: 11.10.2019
(51) Int. Cl.: A01D 69/00, A01D 69/06, A01D 43/10, A01D 43/08

(54) **ANTRIEBSANORDNUNG ZUM DREHZAHLVERÄNDERBAREN ANTRIEB EINER MIT ZWEI KONDITIONIERWALZEN AUSGESTATTETEN KONDITIONIEREINRICHTUNG EINES FELDHÄCKSLERS**
DRIVE ARRANGEMENT FOR THE VARIABLE-SPEED DRIVE OF A CONDITIONING DEVICE OF A FORAGE HARVESTER EQUIPPED WITH TWO CONDITIONING ROLLERS
SYSTÈME POUR ENTRAÎNEMENT À CHANGEMENT DE VITESSE DE ROTATION D'UN AGENCEMENT DE CONDITIONNEMENT ÉQUIPÉ DE DEUX ROULEAUX DE CONDITIONNEMENT D'UNE RAMASSEUSE-HACHEUSE

(30) Priorität: 11.10.2018 DE 102018217418
(43) Veröffentlichungstag der Anmeldung: 22.04.2020
(73) Patentinhaber: Deere & Company, Moline, IL 61265 (US)
(72) Erfinder: Bohrer, Stefan, 68163 Mannheim (DE); Stein, Matthias, 68163 Mannheim (DE)
(74) Vertreter: Holst, Sönke

(56) Entgegenhaltungen:
- DE-A1-102007 022 077
- DE-A1-102013 110 636
- DE-A1-102016 211 570
- US-A- 5 778 644

## Beschreibung

Die Erfindung betrifft einen Feldhäcksler mit einer Antriebsanordnung zum drehzahlveränderbaren Antrieb einer mit zwei Konditionierwalzen ausgestatteten Konditioniereinrichtung.

### Technologischer Hintergrund

Feldhäcksler dienen zur Ernte von ganzen Pflanzen oder ihren Teilen, die im Betrieb mittels eines Erntevorsatzes von einem Feld aufgenommen, durch Vorpresswalzen zusammengedrückt und einer Messertrommel zugeführt werden, deren Häckselmesser die Pflanzen im Zusammenwirken mit einem Gegenmesser zerschneiden. Anschließend werden die zerschnittenen Pflanzen oder -teile optional einer Konditioniereinrichtung zugeführt und durch einen Nachbeschleuniger in einen Auswurfkrümmer gefördert, der sie auf ein Transportfahrzeug überlädt. Die geernteten Pflanzen dienen in der Regel als Viehfutter oder zur Biogaserzeugung.

Die Konditioniereinrichtung umfasst üblicherweise zwei oder mehr gegensinnig angetriebene, zusammenwirkende Walzen, die durch eine Federkraft gegeneinander vorgespannt sind und zwischen denen das Häckselgut hindurchgeführt wird. Die Konditioniereinrichtung wird bei der Maisernte verwendet, um die im Häckselgut enthaltenen Körner anzuschlagen und die Verdaulichkeit des Futters zu verbessern. Die Walzen der Konditioniereinrichtung sind üblicherweise mit sich in axialer Richtung erstreckenden Zähnen oder Kanten versehen, sodass man einen nicht-kreisförmigen, profilierten Querschnitt der Walzen erhält (s. beispielsweise DE 83 02 421 U1).

Um bei derartigen, im Wesentlichen zylindrischen Konditionierwalzen den Einwirkungsgrad auf das Erntegut zu verändern, wird üblicherweise die Relativdrehzahl beider Konditionierwalzen variiert, wozu im einfachsten Fall Riemenscheiben des gemeinsamen, vom Antrieb eines Nachbeschleunigers abgeleiteten Antriebsstranges (s. DE 10 2014 219 049 A1) einer oder beider Konditionierwalzen gegen Riemenscheiben mit anderem Durchmesser ausgetauscht werden.

Zur Drehzahländerung bei laufendem Betrieb aus der Kabine des Feldhäckslers heraus wurde vorgeschlagen, eine der Konditionierwalzen mit einem Hydraulikmotor anzutreiben (EP 1 156 712 A1), oder beide Konditionierwalzen mit einem gemeinsamen Riemenantrieb anzutreiben und bei einer Konditionierwalze den mechanischen Antrieb mit einem zweiten, drehzahlveränderlichen Antrieb zu überlagern, der durch einen Elektro- oder Hydraulikmotor bereitgestellt werden kann, um deren Drehzahl zu verstellen (DE 10 2013 110 636 A1), oder ausgehend von der Antriebswelle eines Nachbeschleunigers die beiden Konditionierwalzen über getrennte Riemen anzutreiben, von denen wenigstens einer eine verstellbare Übersetzung bereitstellt (DE 10 2016 211 570 A1).

### Aufgabe

Während die Drehzahländerung der Konditionierwalzen durch einen Wechsel der Riemenscheibe relativ umständlich und während des Erntebetriebs nicht möglich ist und ein rein hydraulischer Antrieb einer der Konditionierwalzen (EP 1 156 712 A1) unter Gesichtspunkten des Wirkungsgrades problematisch ist, ist bei dem Antrieb zweier Konditionierwalzen durch einen einzigen Riemen (DE 10 2013 110 636 A1) als nachteilig anzusehen, dass dieser Riemen die gesamte Antriebsleistung für die Konditionierwalzen bereitstellen muss. Diese Anordnung erfordert zudem, dass eine der Riemenscheiben zum Antrieb der Konditionierwalzen mit der glatten Außenseite des Riemens angetrieben werden muss, was den Riemenverschleiß vergrößert (vgl. hierzu auch WO 2012/010396 A1). Der Riemenvariator gemäß DE 102016211 570 A1 muss ebenfalls die gesamte Leistung für eine der Konditionierwalzen bereitstellen, sodass er hinreichend groß zu dimensionieren ist und dementsprechend preisaufwändig ist.

Die der Erfindung zu Grunde liegende Aufgabe wird darin gesehen, eine Antriebsanordnung zum drehzahlveränderbaren Antrieb einer Konditionierwalze einer Konditioniereinrichtung eines Feldhäckslers bereitzustellen, die sich durch geringen Aufwand und hohe übertragbare Leistungen auszeichnet.

### Erfindung

Die vorliegende Erfindung wird durch die Patentansprüche definiert.

Ein Feldhäcksler ist mit einem tragenden Fahrgestell und einem Antriebsmotor ausgestattet, der über einen Hauptriemenantrieb mit der Eingangswelle einer Antriebsanordnung zum drehzahlveränderbaren Antrieb einer mit zwei Konditionierwalzen ausgestatteten Konditioniereinrichtung in Antriebsverbindung steht. Die Antriebsanordnung umfasst die antreibbare Eingangswelle, einen ersten Antriebsstrang zwischen der Eingangswelle und einer ersten Konditionierwalze, der einen ersten Riementrieb und ein drehrichtungsumkehrendes Getriebe umfasst, und einen zweiten Antriebsstrang zwischen der Eingangswelle und einer zweiten Konditionierwalze, der einen zweiten Riementrieb umfasst. Die Ausgangsdrehzahl des ersten und/oder zweiten Antriebsstrangs ist durch ein mit einem zusätzlichen Antrieb verbundenes Überlagerungsgetriebe veränderbar.

Mit anderen Worten werden wird ein gewisser Anteil der Antriebsleistung der Konditionierwalzen und insbesondere ihr Hauptteil über rein mechanische Antriebsstränge (Riementriebe) bereitgestellt. Eine erste Konditionierwalze, bei der es sich in der Regel um die untere bzw. hintere Konditionierwalze handelt, wird gegensinnig zu einer angetriebenen Eingangswelle angetrieben, indem deren Drehrichtung durch ein drehrichtungsumkehrendes Getriebe umgedreht und über einen ersten Riementrieb auf die erste Konditionierwalze übertragen wird, oder durch den ersten Riementrieb auf das drehrichtungsumkehrende Getriebe übertragen wird, welches die erste Konditionierwalze antreibt. Eine zweite Konditionierwalze, bei der es sich in der Regel um die obere bzw. vordere Konditionierwalze handelt, wird gleichsinnig mit der Eingangswelle über einen zweiten Riementrieb angetrieben. Zumindest eine der Konditionierwalzen wird durch ein Überlagerungsgetriebe und einen zusätzlichen Antrieb mit veränderlicher Drehzahl in Drehung versetzt, um die Drehzahl der betroffenen Konditionierwalze zu verstellen. Auf diese Weise erfolgt der Antrieb der Konditionierwalzen weiterhin größtenteils mechanisch über getrennte Riementriebe, was (ohne Kraftübertragung über die Außenflächen der Riemen) eine problemlose Übertragung hoher Antriebsleistungen ermöglicht, die beispielsweise zum Abfördern von Verstopfungen benötigt werden, wobei jedoch das (in der Regel als Planetengetriebe ausgeführte) Überlagerungsgetriebe und der zusätzliche Antrieb eine Drehzahlverstellung ermöglichen.

Der zusätzliche Antrieb kann einen Hydromotor oder einen Elektromotor oder einen Riemenvariator umfassen, welcher auch als so genanntes CVT ausgeführt sein kann, das anstelle eines Riemens ein Schubgliederband oder eine Laschenkette verwendet, die zwischen konischen, abstandsveränderlichen Scheiben mit radialen Vertiefungen angeordnet ist.

Das drehrichtungsumkehrende Getriebe kann durch ein Planetengetriebe oder ein Stirnzahnradgetriebe gebildet werden- Das Planetengetriebe mit einem Sonnenrad, einem Planetenradträger und einem Hohlrad ausgestattet sein, wobei das Hohlrad mit der Eingangswelle verbunden, der Planetenradträger ortsfest gehalten und das Sonnenrad mit dem ersten Riementrieb verbunden werden kann. Es wäre auch denkbar, das Hohlrad mit dem ersten Riementrieb und das Sonnenrad mit der Eingangswelle zu verbinden.

Das Überlagerungsgetriebe kann am Antriebs- oder Abtriebsende eines der Riementriebe angeordnet sein.

Das drehrichtungsumkehrende Getriebe kann am Antriebs- oder Abtriebsende eines der Riementriebe angeordnet sein.

Der erste Riementrieb und der zweite Riementrieb können auf derselben Seite der Eingangswelle oder auf gegenüberliegenden Seiten der Eingangswelle angeordnet sein.

Das drehrichtungsumkehrende Getriebe kann durch ein Stirnzahnradgetriebe gebildet werden, das ein außen verzahntes Hohlrad eines als Überlagerungsgetriebe dienenden Planetengetriebes umfasst.

Die Eingangswelle kann zusätzlich einen Nachbeschleuniger antreiben.

### Ausführungsbeispiele

Anhand der Abbildungen werden zwei Ausführungsbeispiele der Erfindung erläutert. Es zeigen:
- Fig. 1: eine schematische seitliche Ansicht eines Feldhäckslers,
- Fig. 2: eine schematische Draufsicht auf das Antriebssystem des Feldhäckslers,
- Fig. 3: eine schematische Ansicht auf eine erste Ausführungsform einer Antriebsanordnung zum Antrieb der Konditionierwalzen des Feldhäckslers von vorn und oben,
- Fig. 4: eine schematische Ansicht auf eine zweite Ausführungsform einer Antriebsanordnung zum Antrieb der Konditionierwalzen des Feldhäckslers von vorn und oben,
- Fig. 5: eine schematische Ansicht auf eine dritte Ausführungsform einer Antriebsanordnung zum Antrieb der Konditionierwalzen des Feldhäckslers von vorn und oben, und.
- Fig. 6: eine schematische Ansicht auf eine vierte Ausführungsform einer Antriebsanordnung zum Antrieb der Konditionierwalzen des Feldhäckslers von vorn und oben.

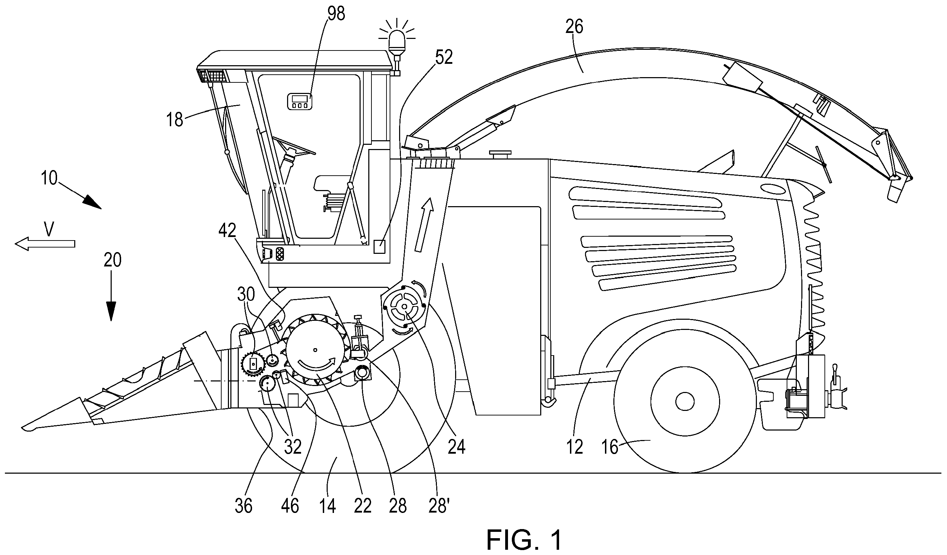

In der Figur 1 ist selbstfahrender Feldhäcksler 10 in schematischer Seitenansicht dargestellt. Der Feldhäcksler 10 baut sich auf einem tragenden Fahrgestell 12 auf, welches von vorderen angetriebenen Rädern 14 und lenkbaren rückwärtigen Rädern 16 getragen wird. Die Bedienung des Feldhäckslers 10 erfolgt von einer Fahrerkabine 18 aus, von der aus ein an einem Einzugsgehäuse 36 lösbar befestigter Erntevorsatz 20 in Form eines Mähvorsatzes für die Maisernte einsehbar ist. Mittels des Erntevorsatzes 20 abgeschnittenes Erntegut, z. B. Mais oder dergleichen, wird an der Frontseite des Feldhäckslers 10 über einen im Einzugsgehäuse 36 angeordneten Einzugsförderer 36 mit Vorpresswalzen 30,32 einer Häckseltrommel 22 zugeführt, die es im Zusammenwirken mit einer Gegenschneide 46 in kleine Stücke häckselt und es einer Konditioniereinrichtung mit zusammenwirkenden Konditionierwalzen 28, 28' aufgibt, von der aus es zu einer Fördervorrichtung 24 gelangt. Die Konditionierwalzen 28, 28' können als zylindrische, in Umfangsrichtung verzahnte Walzen hergestellt oder in axialer Richtung wellenförmig gestaltet sein. Das Gut verlässt den Feldhäcksler 10 zu einem nebenher fahrenden Transportfahrzeug über einen um eine etwa vertikale Achse drehbaren und in der Neigung verstellbaren Auswurfkrümmer 26. Die Messer der Häckseltrommel 22 können durch eine Schleifeinrichtung 42 geschliffen werden. Im Folgenden beziehen sich Richtungsangaben, wie seitlich, unten und oben, auf die Vorwärtsbewegungsrichtung V des Feldhäckslers 10, die in der Figur 1 nach links verläuft.

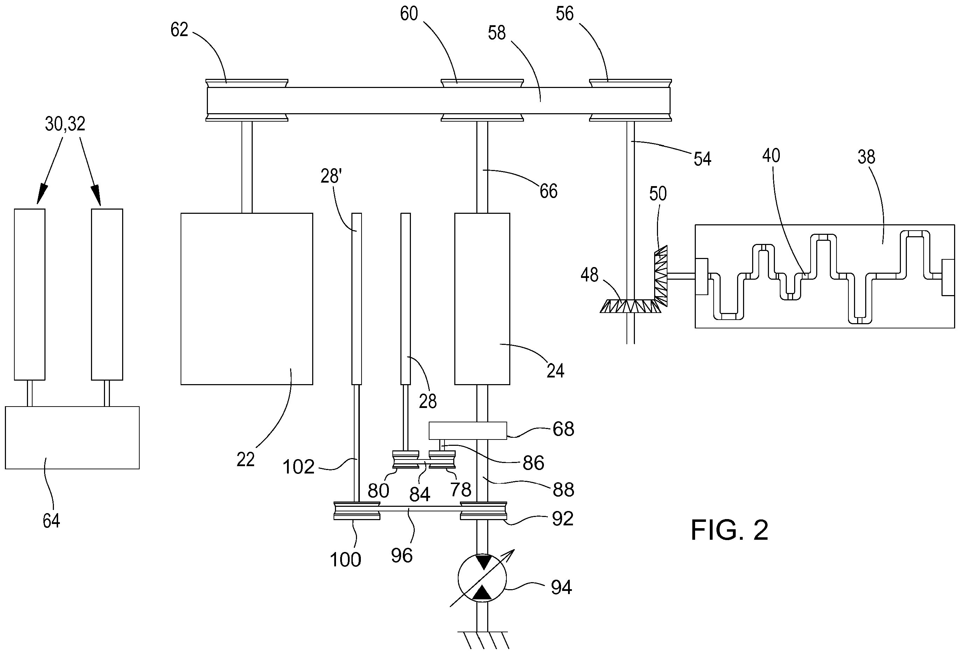

Die Figur 2 zeigt eine Draufsicht auf das Antriebssystem der Erntemaschine 10. Im rückwärtigen Bereich der Erntemaschine 10 befindet sich ein Verbrennungsmotor 38 insbesondere in Form eines Dieselmotors. Der Verbrennungsmotor 38 erstreckt sich mit seiner Längsachse in der Vorwärtsrichtung der Erntemaschine 10 und umfasst eine Kurbelwelle 40, die sich nach vorn aus dem Gehäuse des Verbrennungsmotors 38 heraus erstreckt. Der Verbrennungsmotor 38 treibt im Betrieb mit seiner Kurbelwelle 40 eine erste Längswelle an, die mit dem ersten Kegelzahnrad 50 eines Winkelgetriebes verbunden ist. Das zweite Kegelzahnrad 48 des Winkelgetriebes ist mit einer Querwelle 54 verbunden, welche mit einer Riemenscheibe 56 des Hauptriementriebes gekoppelt ist, welcher über einen Riemen 58 eine Riemenscheibe 60 und eine Riemenscheibe 62 antreibt. Die Riemenscheibe 62 treibt die Häckseltrommel 22 an, während die Riemenscheibe 60 eine Eingangswelle 66 antreibt, die ihrerseits den Nachbeschleuniger 24 und (über eine erfindungsgemäße Antriebsanordnung) die Konditionierwalzen 28, 28' antreibt. Der Antrieb der Vorpresswalzen 30, 32 erfolgt über ein Getriebe 64, das hydraulisch oder mechanisch angetrieben werden kann.

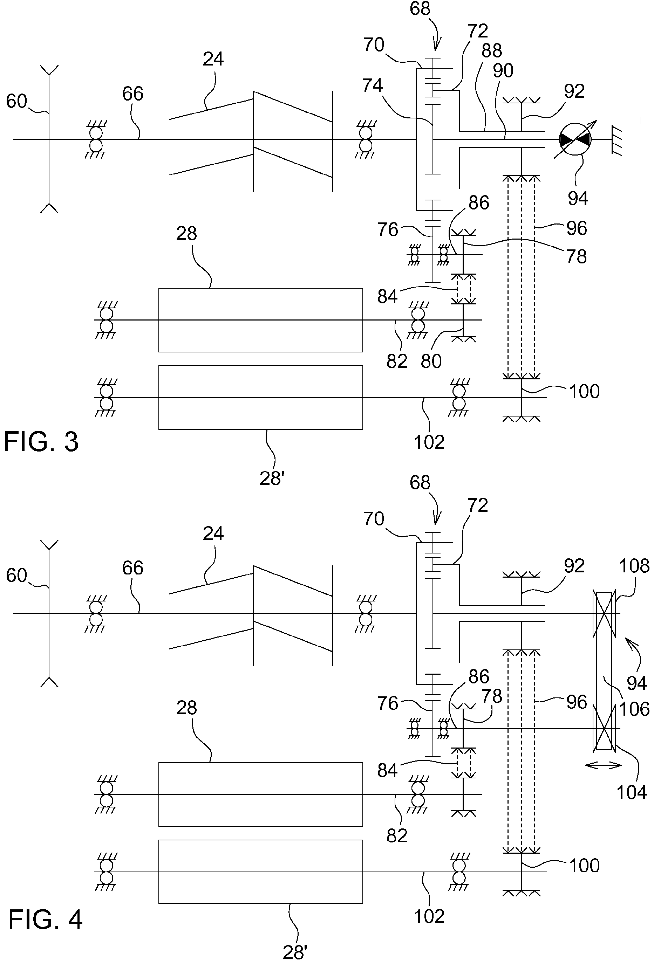

Die Eingangswelle 66 treibt über ein drehrichtungsumkehrendes Getriebe 68 und einen ersten Treibriemen 84 die untere, hintere Konditionierwalze 28 an, während die obere, vordere Konditionierwalze 28' über einen zweiten Treibriemen 96 angetrieben wird. Die Antriebsanordnung zum Antrieb der Konditionierwalzen 28, 28' wird in der Figur 3 detaillierter gezeigt. Die Eingangswelle 66 ist auf von der Riemenscheibe 62 beabstandeten Seite des Nachbeschleunigers 24 drehfest mit dem Hohlrad 70 eines Planetengetriebes verbunden. Das Hohlrad 70 ist außen verzahnt und kämmt mit einem Zahnrad 76, das über eine Welle 86 eine Riemenscheibe 78 antreibt, die über den ersten Treibriemen 84 mit einer Riemenscheibe 80 in Antriebsverbindung steht, welche ihrerseits über eine Welle 82 die hintere, untere Konditionierwalze 28 antreibt. Aufgrund der Drehrichtungsumkehr des Hohlrads 70 und des Zahnrads 76 dreht sich die untere, hintere Konditionierwalze 28 gegensinnig zur Eingangswelle 66. Das Planetengetriebe und das Zahnrad 76 sind innerhalb eines gemeinsamen Gehäuses angebracht und bilden gemeinsam das drehrichtungsumkehrende Getriebe 68.

Der Antrieb der oberen, vorderen Konditionierwalze 28' erfolgt über das Planetengetriebe, dessen Sonnenrad 74 über eine innere Welle 90 von einem zusätzlichen Antrieb 94, der hier als verstellbarer Hydromotor ausgeführt ist, angetrieben wird. Die innere Welle 90 wird von einer Hohlwelle 88 umschlossen, die den Planetenradträger 72 des Planetengetriebes mit einer Riemenscheibe 92 drehfest antriebsverbunden ist. Die Riemenscheibe 92 treibt über den zweiten Treibriemen 96 eine Riemenscheibe 100 an, welche mit einer Welle 102 der oberen Konditionierwalze 28' gekoppelt ist.

Somit bilden das Hohlrad 70 des Planetengetriebes mit dem Zahnrad 76 und dem ersten Treibriemen 84 einen ersten Antriebsstrang zwischen der Eingangswelle 66 und der unteren Konditionierwalze 28, der einen ersten Riementrieb (mit den Riemenscheiben 78 und 80 und dem ersten Treibriemen 84) und das drehrichtungsumkehrende Getriebe 68 umfasst. Ein zweiter Antriebsstrang zwischen der Eingangswelle 66 und der oberen Konditionierwalze 28' umfasst einen zweiten Riementrieb mit den Riemenscheiben 92, 100 und dem zweiten Treibriemen 96. Die Ausgangsdrehzahl des zweiten Antriebsstrangs ist in dieser Ausführungsform durch ein mit dem zusätzlichen Antrieb 94 verbundenes Überlagerungsgetriebe (Planetengetriebe) veränderbar. Der zusätzliche Antrieb 94 kann durch die Bord- oder Arbeitshydraulik des Feldhäckslers 10 oder eine beliebige, vom Verbrennungsmotor 38 angetriebene Pumpe gespeist werden. Da die zur hydraulischen Versorgung des zusätzlichen Antriebs 94 vorgesehene Pumpe und/oder der Hydromotor des Antriebs 94 ein verstellbares Schluckvolumen aufweist, ermöglicht der zusätzliche Antrieb eine Drehzahlverstellung der Drehzahl der oberen Konditionierwalze 28', was eine Anpassung der Drehzahldifferenz der Konditionierwalzen 28, 28' an die aktuellen Erntegutbedingungen ermöglicht, sei es auf eine manuell vom Bediener in der Kabine 18 über eine Bedienerschnittstelle 98 eingegebene Eingabe hin oder durch eine automatische Steuerung 52, die mit einem beliebigen Sensor zur Erfassung von Ernteguteigenschaften bzw. dem Anteil aufgebrochener Körner im Erntegut zusammenwirkt. Der zusätzliche Antrieb 94 könnte auch als Elektromotor ausgeführt sein.

Bei der in der Figur 4 gezeigten, zweiten Ausführungsform, bei der mit der ersten Ausführungsform übereinstimmende Elemente mit denselben Bezugszeichen versehen sind, ist der zusätzliche Antrieb 94 durch einen Riemenvariator realisiert: die Welle 86 treibt eine Riemenscheibe 104 an, die über einen Riemen 106 mit einer Riemenscheibe 108 in Antriebsverbindung steht, die ihrerseits über die innere Welle 90 das Sonnenrad 74 antreibt. Die Wirkungsweise entspricht jener der Ausführungsform nach Figur 3, wobei jedoch der als Riemenvariator ausgeführte, zusätzliche Antrieb 94 ein mittels eines Aktors (nicht gezeigt) verstellbares Übersetzungsverhältnis aufweist, um die Drehzahl der oberen Konditionierwalze 28' verändern zu können.

Somit bilden auch hier das Hohlrad 70 des Planetengetriebes mit dem Zahnrad 76 und dem ersten Treibriemen 84 einen ersten Antriebsstrang zwischen der Eingangswelle 66 und der unteren Konditionierwalze 28, der einen ersten Riementrieb (mit den Riemenscheiben 78 und 80 und dem ersten Treibriemen 84) und das drehrichtungsumkehrende Getriebe 68 umfasst. Ein zweiter Antriebsstrang zwischen der Eingangswelle 66 und der oberen Konditionierwalze 28' umfasst einen zweiten Riementrieb mit den Riemenscheiben 92, 100 und dem zweiten Treibriemen 96. Die Ausgangsdrehzahl des zweiten Antriebsstrangs ist in dieser Ausführungsform durch ein mit dem zusätzlichen Antrieb 94, der hier jedoch als Riemenvariator ausgeführt ist, verbundenes Überlagerungsgetriebe (Planetengetriebe) veränderbar.

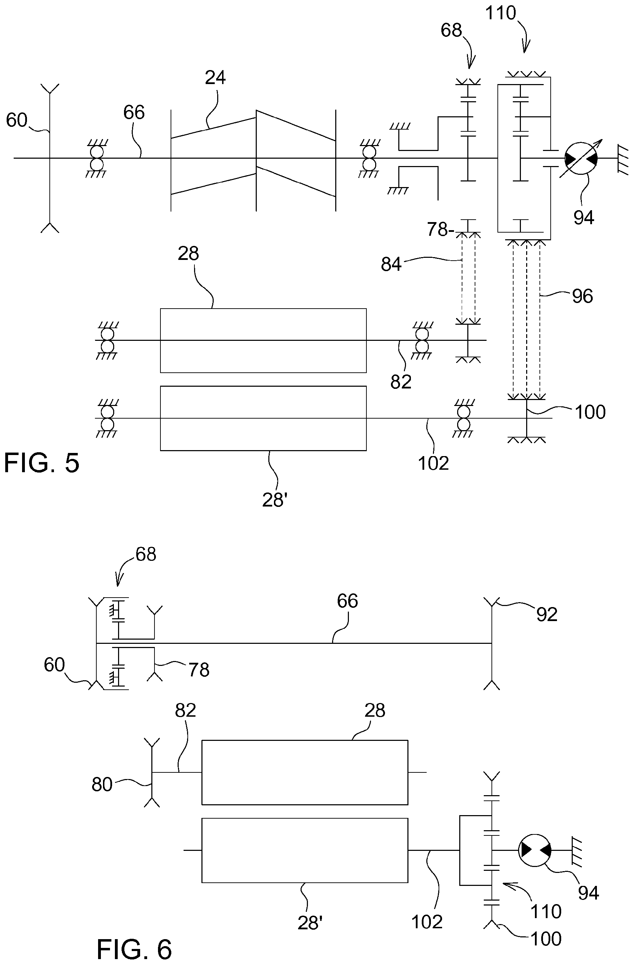

Die in der Figur 5 gezeigte, dritte Ausführungsform, bei der mit der ersten Ausführungsform übereinstimmende Elemente mit denselben Bezugszeichen versehen sind, verwendet als drehrichtungsumkehrendes Getriebe 68 ein erstes Planetengetriebe, dessen Hohlrad mit der Riemenscheibe 78 verbunden bzw. damit einteilig ausgeführt ist. Der Planetenradträger des drehrichtungsumkehrenden Getriebes 68 ist drehfest mit dem Fahrgestell 12 gekoppelt und das Sonnenrad des drehrichtungsumkehrenden Getriebes ist mit der Eingangswelle 66 gekoppelt. Der zweite Antriebsstrang wird bei dieser Ausführungsform durch das zweite Planentengetriebe 110 und den zweiten Riementrieb mit dem zweiten Treibriemen 96 gebildet. Der Planetenradträger des zweiten Planetengetriebes 110 ist mit der Riemenscheibe 92 verbunden, während das Sonnenrad des zweiten Planetengetriebes 110 über die innere Welle 90 mit dem zusätzlichen Antrieb 94 gekoppelt ist, der hier, wie bei der ersten Ausführungsform der Figur 3, als Hydromotor 94 ausgeführt ist, jedoch auch als Elektromotor oder wie in Figur 4 als mit dem ersten Antriebsstrang gekoppelter Riemenvariator ausgeführt sein könnte. Das Hohlrad des zweiten Planetengetriebes 110 ist direkt mit der Eingangswelle 66 gekoppelt.

Somit bilden auch hier das erste Planetengetriebe mit dem ersten Treibriemen 84 einen ersten Antriebsstrang zwischen der Eingangswelle 66 und der unteren Konditionierwalze 28, der einen ersten Riementrieb (mit den Riemenscheiben 78 und 80 und dem ersten Treibriemen 84) und das drehrichtungsumkehrende Getriebe 68 umfasst. Ein zweiter Antriebsstrang zwischen der Eingangswelle 66 und der oberen Konditionierwalze 28' umfasst einen zweiten Riementrieb mit den Riemenscheiben 92, 100 und dem zweiten Treibriemen 96. Die Ausgangsdrehzahl des zweiten Antriebsstrangs ist in dieser Ausführungsform durch das zweite, mit dem zusätzlichen Antrieb 94 verbundene Überlagerungsgetriebe (Planetengetriebe 110) veränderbar.

Bei der Ausführungsform nach Figur 6, bei der mit den anderen Ausführungsformen übereinstimmende Elemente mit denselben Bezugszeichen versehen sind, ist der Antriebsstrang der unteren, rückwärtigen Konditionierwalze 28 auf der Seite der Eingangswelle 66 angeordnet, an der sich auf die Riemenscheibe 60 befindet. Er umfasst das drehrichtungsumkehrende Getriebe 68, das ähnlich wie in Figur 5 ausgeführt ist, jedoch mit Antrieb des Hohlrads durch die Riemenscheibe 60 (oder die Eingangswelle 66), feststehendem Planetenradträger und Abtrieb durch den Riemen 84 über die mittels einer Hohlwelle mit dem Sonnenrad gekoppelte Riemenscheibe 78 auf den Riemen 84, der um die Riemenscheiben 78 und 80 umläuft und die Welle 82 der unteren, rückwärtigen Konditionierwalze 28 antreibt. Analog treibt der zweite Antriebsstrang der oberen, vorderen Konditionierwalze 28' letztere über den zweiten Riementrieb mit den Riemenscheiben 92 und 100 und dem zweiten Treibriemen 96 an. Der zusätzliche Antrieb 64 und das als zweites Planetengetriebe 110 ausgeführte Überlagerungsgetriebe sind jedoch, anders als in der Figur 5, am Abtriebsende des zweiten Riementriebs zwischen der Riemenscheibe 100 und der Welle 102 der oberen, vorderen Konditionierwalze 28' positioniert. Der zusätzliche Antrieb 64 treibt das Sonnenrad an, die Riemenscheibe 100 das Hohlrad und der Planetenradträger des zweiten Planetengetriebes 110 ist mit der Welle 102 gekoppelt.

Der Nachbeschleuniger 24 und die Eingangswelle 66 drehen sich in den dargestellten Ausführungsformen gleichsinnig mit der oberen Konditionierwalze 28' und die andere Konditionierwalze 28 gegensinnig dazu, weshalb letztere über das drehrichtungsumkehrende Getriebe 68 angetrieben wird. Sollte der Nachbeschleuniger 24 nicht unterschlächtig arbeiten, wie gezeigt, wären das drehrichtungsumkehrende Getriebe 68 und der erste Riementrieb der oberen Konditionierwalze 28' und der zweite Riementrieb der unteren Konditionierwalze 28 zuzuordnen.

## Patentansprüche

1. Feldhäcksler (10) mit einem tragenden Fahrgestell (12) und einem Antriebsmotor (38), der über einen Hauptriemenantrieb mit einer Eingangswelle (66) einer Antriebsanordnung zum drehzahlveränderbaren Antrieb einer mit zwei Konditionierwalzen (28, 28') ausgestatteten Konditioniereinrichtung des Feldhäckslers (10) in Antriebsverbindung steht, wobei die Antriebsanordnung Folgendes umfasst:
die antreibbare Eingangswelle (66),
einen ersten Antriebsstrang zwischen der Eingangswelle (66) und einer ersten Konditionierwalze (28), der einen ersten Riementrieb und ein drehrichtungsumkehrendes Getriebe (68) umfasst,
und einen zweiten Antriebsstrang zwischen der Eingangswelle (66) und einer zweiten Konditionierwalze (28'), der einen zweiten Riementrieb umfasst,
**dadurch gekennzeichnet, dass** die Ausgangsdrehzahl des ersten und/oder zweiten Antriebsstrangs durch ein mit einem zusätzlichen Antrieb (64) verbundenes Überlagerungsgetriebe veränderbar ist.

2. Feldhäcksler (10) nach Anspruch 1, wobei der zusätzliche Antrieb (64) einen Hydromotor oder einen Elektromotor oder einen Riemenvariator (94) umfasst.

3. Feldhäcksler (10) nach Anspruch 1 oder 2, wobei das drehrichtungsumkehrende Getriebe (68) durch ein Planetengetriebe oder ein Stirnzahnradgetriebe gebildet wird.

4. Feldhäcksler (10) nach einem der vorhergehenden Ansprüche, wobei das Überlagerungsgetriebe am Antriebs-oder Abtriebsende eines der Riementriebe angeordnet ist.

5. Feldhäcksler (10) ach einem der vorhergehenden Ansprüche, wobei das drehrichtungsumkehrende Getriebe am Antriebs- oder Abtriebsende eines der Riementriebe angeordnet ist.

6. Feldhäcksler (10) nach einem der vorhergehenden Ansprüche, wobei der erste Riementrieb und der zweite Riementrieb auf derselben Seite der Eingangswelle (66) oder auf gegenüberliegenden Seiten der Eingangswelle (66) angeordnet sind.

7. Feldhäcksler (10) nach einem der Ansprüche 3 bis 6, wobei das drehrichtungsumkehrende Getriebe (68) durch ein Stirnzahnradgetriebe gebildet wird, das ein verzahntes Hohlrad eines als Überlagerungsgetriebe dienenden Planetengetriebes umfasst.

8. Feldhäcksler (10) nach einem der Ansprüche 1 bis 7, wobei die Eingangswelle (66) zusätzlich einen Nachbeschleuniger (24) antreibt.

## Claims

1. Forage harvester (10) with a supporting chassis (12) and a drive motor (38) which is connected in terms of drive via a main belt drive to an input shaft (66) of a drive arrangement for the variable-speed driving of a conditioning device, equipped with two conditioning rollers (28, 28'), of the forage harvester (10), wherein the drive arrangement comprises the following:
the driveable input shaft (66),
a first drive train between the input shaft (66) and a first conditioning roller (28), the drive train comprising a first belt drive and a gear unit (68) reversing the direction of rotation,
and a second drive train between the input shaft (66) and a second conditioning roller (28'), said drive train comprising a second belt drive,
**characterized in that** the output rotational speed of the first and/or second drive train can be varied by a superposition gear unit which is connected to an additional drive (64).

2. Forage harvester (10) according to Claim 1, wherein the additional drive (64) comprises a hydraulic motor or an electric motor or a belt variator (94).

3. Forage harvester (10) according to Claim 1 or 2, wherein the gear unit (68) reversing the direction of rotation is formed by a planetary gear unit or a spur gear unit.

4. Forage harvester (10) according to one of the preceding claims, wherein the superposition gear unit is arranged at the driving end or driven end of one of the belt drives.

5. Forage harvester (10) according to one of the preceding claims, wherein the gear unit reversing the direction of rotation is arranged at the driving end or driven end of one of the belt drives.

6. Forage harvester (10) according to one of the preceding claims, wherein the first belt drive and the second belt drive are arranged on the same side of the input shaft (66) or on opposite sides of the input shaft (66).

7. Forage harvester (10) according to one of Claims 3 to 6, wherein the gear unit (68) reversing the direction of rotation is formed by a spur gear unit which comprises a toothed ring gear of a planetary gear unit serving as the superposition gear unit.

8. Forage harvester (10) according to one of Claims 1 to 7, wherein the input shaft (66) additionally drives a post-accelerator (24).

## Revendications

1. Ramasseuse-hacheuse (10), comprenant un châssis porteur (12) et un moteur d'entraînement (38) qui est en liaison d'entraînement, par l'intermédiaire d'un entraînement par courroie principal, avec un arbre d'entrée (66) d'un agencement d'entraînement pour l'entraînement à vitesse variable d'un dispositif de conditionnement de la ramasseuse-hacheuse (10), équipé de deux rouleaux de conditionnement (28, 28'), l'agencement d'entraînement comprenant :
l'arbre d'entrée (66) pouvant être entraîné,
une première chaîne cinématique entre l'arbre d'entrée (66) et un premier rouleau de conditionnement (28) qui comprend une première commande à courroie et un engrenage à inversion du sens de rotation (68),
et une deuxième chaîne cinématique entre l'arbre d'entrée (66) et un deuxième rouleau de conditionnement (28') qui comprend une deuxième commande à courroie,
**caractérisée en ce que** la vitesse de rotation de départ de la première et/ou de la deuxième chaîne cinématique peut être modifiée par un réducteur différentiel relié à un entraînement supplémentaire (64) .

2. Ramasseuse-hacheuse (10) selon la revendication 1, dans laquelle l'entraînement supplémentaire (64) comprend un moteur hydraulique ou un moteur électrique ou un variateur à courroie (94).

3. Ramasseuse-hacheuse (10) selon la revendication 1 ou 2, dans laquelle l'engrenage à inversion du sens de rotation (68) est formé par un engrenage planétaire ou un engrenage à denture droite.

4. Ramasseuse-hacheuse (10) selon l'une quelconque des revendications précédentes, dans laquelle le réducteur différentiel est disposé à l'extrémité d'entraînement ou à l'extrémité entraînée de la commande à courroie.

5. Ramasseuse-hacheuse (10) selon l'une quelconque des revendications précédentes, dans laquelle l'engrenage à inversion du sens de rotation est disposé à l'extrémité d'entraînement ou à l'extrémité entraînée d'une des commandes à courroie.

6. Ramasseuse-hacheuse (10) selon l'une quelconque des revendications précédentes, dans laquelle la première commande à courroie et la deuxième commande à courroie sont disposées du même côté de l'arbre d'entrée (66) ou sur des côtés opposés de l'arbre d'entrée (66).

7. Ramasseuse-hacheuse (10) selon l'une quelconque des revendications 3 à 6, dans laquelle l'engrenage à inversion du sens de rotation (68) est formé par un engrenage à denture droite qui comprend une couronne d'un engrenage planétaire servant de réducteur différentiel.

8. Ramasseuse-hacheuse (10) selon l'une quelconque des revendications 1 à 7, dans laquelle l'arbre d'entrée (66) entraîne en plus un dispositif de postaccélération (24).
